# FASCICULE DE BREVET EUROPEEN

(11) **EP 3 081 816 B1**
(45) Date de publication et mention de la délivrance du brevet: **18.11.2020**
(21) Numéro de dépôt: 15163420.1
(22) Date de dépôt: 13.04.2015
(51) Int. Cl.: F04D 29/046, F04D 29/049, F04D 29/056, F04D 29/059, F04D 1/00, F04D 17/10, F16C 23/04, F16C 17/08

(54) **COMPRESSEUR AVEC DEUX ÉLÉMENTS SPHÉRIQUES SUPPORTANT L'ARBRE**
VERDICHTER MIT ZWEI KUGELN ZUM ABSTÜTZEN DER WELLE
COMPRESSOR WITH TWO SPHERES SUPPORTING THE SHAFT

(43) Date de publication de la demande: 19.10.2016
(73) Titulaire: Belenos Clean Power Holding AG, 2502 Bienne (CH)
(72) Inventeur: Gashi, Rexhep, 1762 Givisiez (CH)
(74) Mandataire: ICB SA

(56) Documents cités:
- EP-A2- 0 318 638
- DE-A1-102010 005 409
- DE-A1-102012 013 048
- JP-U- H04 137 295
- KR-A- 20090 126 661
- US-A- 1 454 041
- US-A- 3 748 000
- US-A- 4 925 321
- US-A- 5 863 179
- US-A1- 2005 225 186

## Description

### Domaine de l'invention

La présente invention se rapporte à un compresseur d'air, et plus particulièrement un compresseur d'air à haute vitesse, comprenant un bâti dans lequel sont montés un stator, un rotor interagissant avec ledit stator et comprenant un arbre, au moins une turbine portée par ledit arbre, un canal d'amenée d'air vers la turbine, et un canal de sortie d'air comprimé, l'arbre du rotor étant monté en rotation sur le bâti autour d'un axe au moyen de deux paliers.

### Arrière-plan de l'invention

De tels compresseurs de fluide sont appelés généralement turbocompresseurs ou compresseurs centrifuges. Ils sont équipés d'un stator et d'un rotor formant un moteur synchrone à aimant permanent (moteur brushless). Les compresseurs de ce type peuvent atteindre de très hautes vitesses, par exemple de 100 000 à 500 000 tours/minute. Le moteur entraine la turbine à régime élevé, la turbine comprimant le fluide. Le fluide peut être de l'air, de l'eau, un gaz, un réfrigérant ou tout autre fluide approprié. Ces compresseurs sont utilisés dans de nombreuses applications industrielles, médicales, pharmaceutiques, alimentaires, automobiles, notamment pour l'apport d'air comprimé, ou des applications frigorifiques, de chauffage ou de climatisation, pour l'apport de fluide comprimé.

Dans ces compresseurs, l'arbre du moteur est monté rotatif sur un bâti au moyen de deux paliers axiaux. Ces paliers peuvent comprendre des roulements à billes. Toutefois, il est difficile d'obtenir des vitesses de rotation avec de tels roulements en raison de la différence de vitesse entre les billes et les bagues. Par ailleurs, bien que les billes utilisées soient en céramique, la durée de vie de tels roulements est limitée à une centaine d'heures en raison des vitesses de rotation élevées. D'autres types de palier peuvent être utilisés, tels que des paliers aérodynamiques. Toutefois, ce type de paliers présente l'inconvénient de se déplacer transversalement au moment du démarrage ou lors de changement de régime, ce qui crée des frottements au niveau des éléments du palier.

Par ailleurs, les compresseurs sont généralement lubrifiés au moyen d'un lubrifiant. L'inconvénient est que le lubrifiant risque de se mélanger au fluide, de sorte que le fluide comprimé est pollué par le lubrifiant. Cela est particulièrement dangereux par exemple dans le cas d'applications médicales, telles que les applications dentaires, pour lesquelles l'air comprimé arrivant dans la bouche doit être sain.

Enfin, les compresseurs sont généralement utilisés dans des installations de très grandes dimensions, le compresseur étant éloigné de l'équipement nécessitant du fluide comprimé. Le fluide comprimé est amené au moyen d'un circuit d'alimentation prévu dans le réseau. Généralement, ce circuit d'alimentation est long, ce qui entraine des risques de fuites de fluide le long du circuit. Les fuites dans un circuit d'air comprimé entrainent des pertes de pression, ce qui génère des pertes financières très importantes. De plus, en raison de la distance séparant le compresseur de l'équipement nécessitant le fluide comprimé, le réseau est maintenu en pression en permanence afin de pouvoir répondre rapidement au besoin de l'équipement. Le fonctionnement en permanence du compresseur représente une consommation d'énergie électrique importante.

Des compresseurs de fluide sont connus de EP0318638A2, JPH04137295U, DE102012013048A1 et US4925321A.

### Résumé de l'invention

L'invention a notamment pour objectif de pallier les différents inconvénients des compresseurs à haute vitesse connus.

Plus précisément, un objectif de l'invention est de fournir un compresseur de fluide à haute vitesse ne nécessitant pas d'agent lubrifiant et n'entrainant aucune pollution du fluide comprimé.

A cet effet, la présente invention concerne un compresseur d'air comme défini dans la revendication 1, un tel compresseur de fluide comprend un bâti dans lequel sont montés un stator, un rotor interagissant avec ledit stator et comprenant un arbre, au moins une turbine portée par ledit arbre, un canal d'amenée de fluide vers la turbine, et un canal de sortie de fluide comprimé, l'arbre du rotor étant monté en rotation sur le bâti autour d'un axe au moyen d'un premier et d'un second paliers . Selon l'invention, le fluide est de l'air. C'est à dire, la présente invention concerne un compresseur d'air. Les références générales au fluide doivent donc être interprétées de manière correspondante.

Selon l'invention, ledit premier, respectivement ledit second, palier comprend un premier, respectivement un second, élément sphérique prévu à une première, respectivement une seconde, extrémité de l'arbre et disposé de manière centrée par rapport à l'axe de l'arbre et un premier, respectivement un deuxième, logement prévu dans le bâti et présentant la forme d'une calotte disposée de manière centrée par rapport à l'axe de l'arbre et agencée pour supporter ledit premier, respectivement ledit second, élément sphérique.

Ainsi, le compresseur de fluide selon l'invention peut tourner à très haute vitesse, sans utiliser d'agent de lubrification susceptible de polluer le fluide comprimé.

D'une manière avantageuse, le premier logement peut être prévu dans le canal d'amenée de fluide.

Selon un mode de réalisation particulièrement préféré, ledit premier logement peut être prévu dans un premier élément-support disposé de manière centrée par rapport à l'axe de l'arbre dans le canal d'amenée de fluide, et maintenu aux parois dudit canal d'amenée de fluide au moyen de branches entre lesquelles le fluide peut circuler.

D'une manière avantageuse, le deuxième logement peut être prévu dans un deuxième élément-support disposé dans le bâti de manière centrée par rapport à l'axe de l'arbre et à l'opposé du premier élément-support.

Selon un mode de réalisation préféré, le deuxième élément-support peut être monté de manière coulissante dans le bâti et être relié audit bâti par des moyens élastiques agencés pour absorber les variations de jeu entre le rotor et le stator.

Selon l'invention, le compresseur selon l'invention comprend en outre au moins deux paliers aérodynamiques prévus sensiblement de chaque côté de l'arbre du rotor.

Selon l'invention, un premier palier aérodynamique est prévu en amont de la turbine, ledit premier palier aérodynamique étant porté par un troisième élément-support disposé de manière centrée par rapport à l'axe de l'arbre dans le canal d'amenée de fluide, et maintenu aux parois dudit canal d'amenée de fluide au moyen de branches entre lesquelles le fluide peut circuler.

D'une manière avantageuse, un deuxième palier aérodynamique peut être prévu au niveau de l'extrémité de l'arbre du rotor, du côté opposé au canal d'amenée de fluide.

Selon un mode de réalisation préféré, au moins l'une des première et seconde extrémités de l'arbre du rotor peut comprendre un troisième logement présentant la forme d'une calotte disposée de manière centrée par rapport à l'axe de l'arbre et agencée pour recevoir ledit élément sphérique monté libre dans ledit troisième logement.

Selon un autre mode de réalisation, l'élément sphérique peut être solidaire d'au moins l'une des première et seconde extrémités de l'arbre du rotor.

### Brève description des dessins

Les buts, avantages et caractéristiques de la présente invention apparaîtront plus clairement dans la description détaillée suivante d'une forme de réalisation de l'invention donnée uniquement à titre d'exemple non limitatif et illustrée par les dessins annexés sur lesquels :
- la figure 1 représente une vue en perspective d'un compresseur de fluide à haute vitesse selon l'invention,
- la figure 2 représente une vue en coupe du compresseur de la figure 1,
- les figures 3 et 4 sont des vues agrandies des zones B et C respectivement de la figure 2, et
- la figure 5 illustre schématiquement une machine équipée d'un compresseur selon l'invention.

### Description détaillée de l'invention

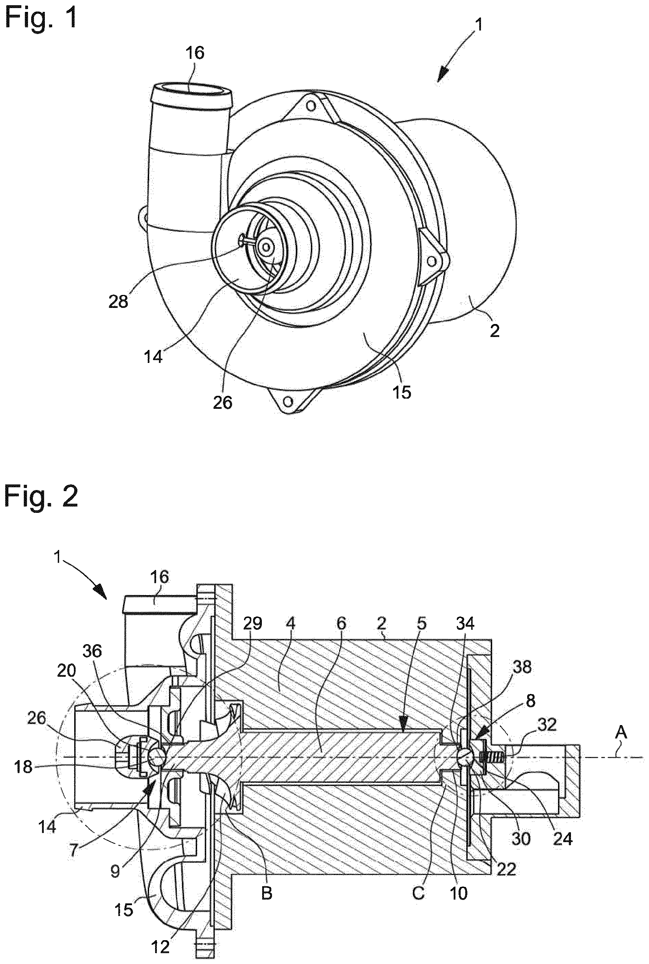

En référence aux figures 1 et 2, il est représenté un compresseur de fluide 1 à haute vitesse, du type turbocompresseur ou compresseur centrifuge. Dans la description qui suit, le terme « compresseur de fluide » désigne un compresseur utilisé pour augmenter la pression d'air.

D'une manière connue en soi, le compresseur comprend un bâti 2 dans lequel sont montés un stator et un rotor, représentés schématiquement sous les références 4 et 5, respectivement. Le stator 4 et le rotor 5 interagissent pour former un moteur synchrone à aimant permanent (moteur brushless).

Le rotor 5 comprend un arbre 6 monté en rotation sur le bâti 2 autour d'un axe A au moyen d'un premier palier 7 et d'un second palier 8, le premier palier 7 étant agencé pour supporter la première extrémité axiale 9 de l'arbre 6 et le second palier 8 étant agencé pour supporter la seconde extrémité axiale 10 de l'arbre 6. Les premier et second paliers 7 et 8 seront décrits en détails ci-après.

L'arbre 6 porte une turbine 12 disposée du côté de la première extrémité axiale 9. Il est bien sûr possible de prévoir plusieurs turbines.

Le compresseur 1 comprend également un canal d'amenée de fluide 14 en direction de la turbine 12, un corps 15, ainsi qu'un canal de sortie de fluide comprimé 16, ces éléments étant solidaires du bâti 2.

Ces différents éléments du compresseur de fluide sont connus de l'homme du métier et ne nécessitent pas ici de description détaillée.

Conformément à l'invention, le premier palier 7 comprend un premier élément sphérique 18 disposé à la première extrémité 9 de l'arbre 6, de manière centrée par rapport à l'axe A de l'arbre 6 et un premier logement 20 prévu sur le bâti 2 présentant la forme d'une calotte disposée de manière centrée par rapport à l'axe A de l'arbre 6 et agencée pour supporter ledit premier élément sphérique 18.

D'une manière similaire, le second palier 8 comprend un second élément sphérique 22 disposé à la seconde extrémité 10 de l'arbre 6, de manière centrée par rapport à l'axe A de l'arbre 6 et un deuxième logement 24 prévu sur le bâti 2 présentant la forme d'une calotte disposée de manière centrée par rapport à l'axe A de l'arbre 6 et agencée pour supporter ledit second élément sphérique 22.

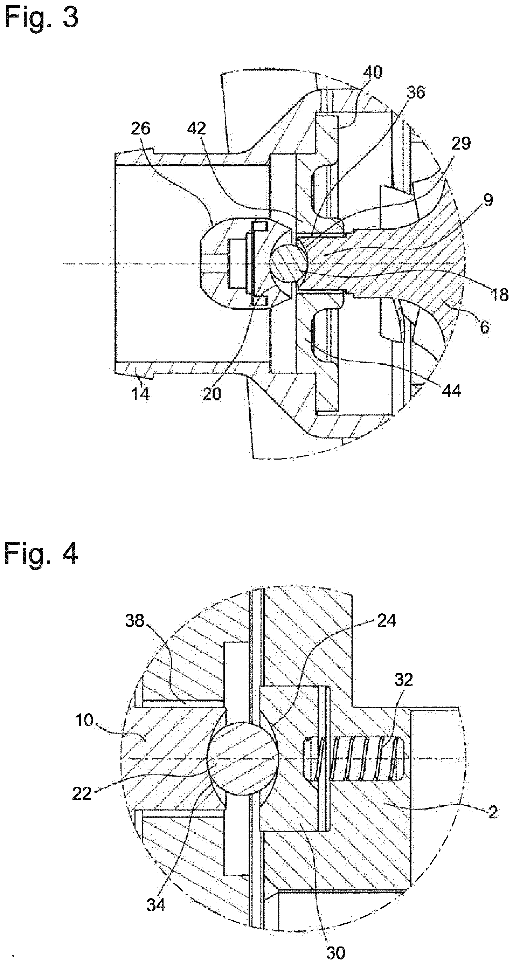

Comme le montre plus précisément la figure 3, le premier logement 20 supportant le premier élément sphérique 18 est prévu dans le canal d'amenée de fluide 14. A cet effet, un premier élément-support 26 présentant une forme ovoïde tronquée est disposé de manière centrée par rapport à l'axe A de l'arbre 6 dans le canal d'amenée de fluide 14. Le premier logement 20 présente la forme d'une calotte, de surface pleine, réalisée à l'extrémité du premier élément-support 26 qui est dirigée vers l'intérieur. Le rayon de la calotte formant le premier logement 20 est supérieur au rayon du premier élément sphérique 18. Les dimensions du premier logement 20 et du premier élément sphérique 18 sont telles que ledit premier élément sphérique 18 est en contact tangentiel avec le fond incurvé du premier logement 20. De préférence, la calotte formant le premier logement 20 et le premier élément sphérique 18 sont parfaitement sphériques afin d'avoir un tel contact tangentiel entre ledit premier logement 20 et ledit premier élément sphérique 18. Le premier élément-support 26 est maintenu aux parois intérieures dudit canal d'amenée de fluide 14 au moyen de trois branches 28 (cf. Figure 1). Ces branches 28 sont espacées les unes des autres de manière à permettre au fluide d'entrer dans le compresseur.

Selon le mode de réalisation représenté, la première extrémité axiale 9 de l'arbre 6 comprend un troisième logement 29 présentant la forme d'une calotte, de surface pleine, disposée de manière centrée par rapport à l'axe A de l'arbre 6 et agencée pour recevoir le premier élément sphérique 18 monté libre dans ledit troisième logement 29. Le rayon de la calotte formant le troisième logement 29 est supérieur au rayon du premier élément sphérique 18. Les dimensions du troisième logement 29 et du premier élément sphérique 18 sont telles que ledit premier élément sphérique 18 est au contact du fond incurvé du troisième logement 29. Ainsi, le premier élément sphérique 18 se présente sous la forme d'une bille montée libre entre les deux calottes formant les premier et troisième logements 20, 29 entre lesquels le premier élément sphérique 18 est maintenu. De préférence, la calotte formant le troisième logement 29 et le premier élément sphérique 18 sont parfaitement sphériques afin d'avoir un contact tangentiel entre ledit troisième logement 29 et ledit premier élément sphérique 18. Le rayon de la calotte formant le troisième logement 29 peut être égal ou différent du rayon de la calotte formant le premier logement 20.

Comme le montre plus précisément la figure 4, le deuxième logement 24 supportant le second élément sphérique 22 est prévu dans un deuxième élément-support 30 disposé dans le bâti 2 de manière centrée par rapport à l'axe A de l'arbre 6, et à l'opposé du premier élément-support 26. Le deuxième logement 24 est formé dans le deuxième élément-support 30 sous la forme d'une calotte, de surface pleine, disposée en regard de l'arbre 6. Le rayon de la calotte formant le deuxième logement 24 est supérieur au rayon du second élément sphérique 22. Les dimensions du deuxième logement 24 et du second élément sphérique 22 sont telles que ledit second élément sphérique 22 est en contact tangentiel avec le fond incurvé du deuxième logement 24. De préférence, la calotte formant le deuxième logement 24 et le second élément sphérique 22 sont parfaitement sphériques afin d'avoir un tel contact tangentiel entre ledit deuxième logement 24 et ledit second élément sphérique 22. Le deuxième élément-support 30 est monté de manière coulissante dans le bâti 2 auquel il est relié par des moyens élastiques 32, tel qu'un ressort, permettant d'absorber les variations de jeu entre le rotor 5 et le stator 4.

Selon le mode de réalisation représenté, la seconde extrémité axiale 10 de l'arbre 6 comprend un quatrième logement 34 présentant la forme d'une calotte, de surface pleine, disposée de manière centrée par rapport à l'axe A de l'arbre 6 et agencée pour recevoir le second élément sphérique 22 monté libre dans ledit quatrième logement 34. Le rayon de la calotte formant le quatrième logement 34 est supérieur au rayon du second élément sphérique 22. Les dimensions du quatrième logement 34 et du second élément sphérique 22 sont telles que ledit second élément sphérique 22 est au contact du fond incurvé du quatrième logement 34. Ainsi, le second élément sphérique 22 se présente sous la forme d'une bille montée libre entre les deux calottes formant les deuxième et quatrième logements 24, 34 entre lesquels le second élément sphérique 22 est maintenu. De préférence, la calotte formant le quatrième logement 34 et le second élément sphérique 22 sont parfaitement sphériques afin d'avoir un contact tangentiel entre ledit quatrième logement 34 et ledit second élément sphérique 22. Le rayon de la calotte formant le quatrième logement 34 peut être égal ou différent du rayon de la calotte formant le deuxième logement 24.

Selon une autre variante de réalisation non représentée, le premier élément sphérique 18 est solidaire de la première extrémité axiale 9 de l'arbre 6. D'une manière similaire, le second élément sphérique 22 peut être solidaire de la seconde extrémité axiale 10 de l'arbre 6. A cet effet, l'élément sphérique 18, 22 peut être collé, chassé sur l'extrémité de l'arbre 6, ou formé d'une seule pièce avec ledit arbre 6.

L'élément sphérique est réalisé de préférence en céramique, ou en tout autre matériau approprié, ledit matériau pouvant présenter un traitement de surface à effet glissant (par exemple un revêtement en polytétrafluoroéthylène, tel que le Téflon®, ou tout autre revêtement approprié connu de l'homme du métier pour présenter un coefficient de frottement extrêmement faible).

Selon l'invention, le compresseur de fluide 1 comprend en outre un premier et un second paliers aérodynamiques prévus sensiblement de chaque côté de l'arbre 6 du rotor, vers les première et seconde extrémités axiales 9 et 10, et représentés schématiquement sous les références 36 et 38.

Selon l'invention, et comme représenté sur la figure 3, le premier palier aérodynamique 36 est prévu en amont de la turbine 12. A cet effet, il est prévu un troisième élément-support 40 présentant un corps central 42 disposé de manière centrée par rapport à l'axe A de l'arbre 6 dans le canal d'amenée de fluide 14, en aval du premier élément-support 26. Le premier palier aérodynamique 36 est logé dans le corps central 42. Le troisième élément-support 40 est maintenu aux parois intérieures dudit canal d'amenée de fluide 14 au moyen de trois branches 44. Ces branches 44 sont espacées les unes des autres de manière à permettre au fluide d'entrer dans le compresseur. Ces branches 44 comprennent des canaux permettant d'amener de l'air au premier palier aérodynamique 36.

Le deuxième palier aérodynamique 38 est prévu à proximité de la seconde extrémité axiale 10, et peut être disposé pour assurer un maintien axial et radial. Selon une variante non représentée, il est possible d'associer le deuxième élément-support 30 à un système d'électro-aimant qui permet, à bas régime ou en cas de changement de régime, de positionner ledit deuxième élément-support 30 pour supporter le second élément sphérique 22 afin d'assurer le positionnement central de l'arbre 6 pour garantir le jeu fonctionnel axial et radial au niveau du deuxième palier aérodynamique 38. Dans les autres cas, le système d'électro-aimant est agencé pour éloigner le deuxième élément-support 30 du second élément sphérique 22, et libérer ledit second élément sphérique 22, le palier aérodynamique 38 étant alors suffisant pour garantir le jeu fonctionnel axial et radial.

Les paliers aérodynamiques utilisés sont connus de l'homme du métier et ne nécessitent pas ici de description détaillée.

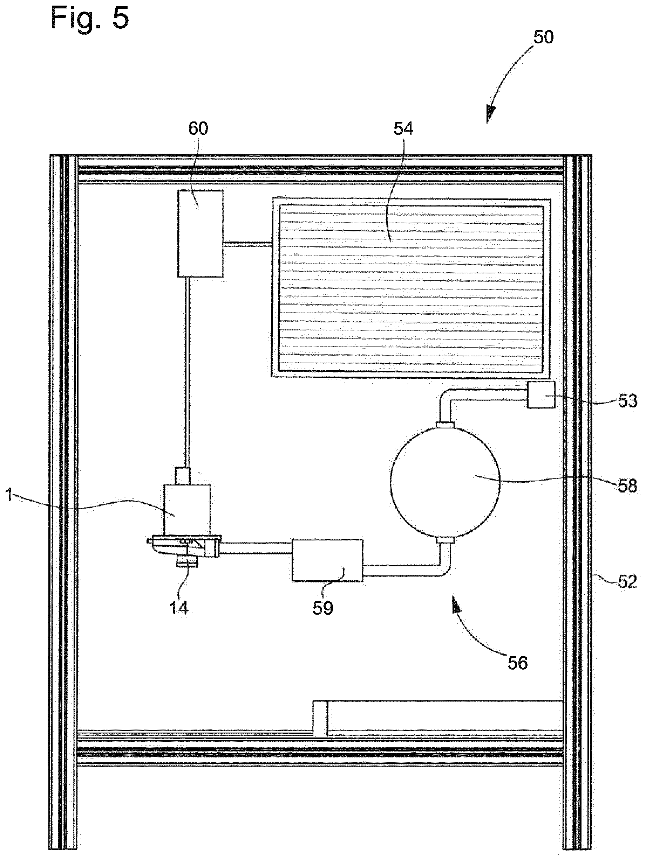

En référence à la figure 5, il est représenté une machine 50 comprenant un châssis 52 renfermant au moins un élément fonctionnel 53 permettant d'accomplir la fonction de la machine, et une unité de pilotage 54. La machine comprend un compresseur de fluide 1, tel que décrit ci-dessus, ledit compresseur de fluide 1 étant intégré dans la machine, à l'intérieur du châssis 52. A cet effet, le châssis 52 comporte une entrée de fluide agencée pour alimenter le compresseur de fluide 1 et amener le fluide au niveau du canal d'amenée de fluide 14. Le châssis 52 renferme également un circuit d'alimentation 56 agencé pour amener le fluide comprimé sortant du compresseur de fluide 1 à l'élément fonctionnel 53.

Le châssis 52 renferme également un réservoir de fluide comprimé 58 ainsi qu'un multiplicateur de pression 59 prévu entre le compresseur de fluide 1 et le réservoir de fluide comprimé 58.

Le châssis 52 renferme en outre une unité de commande 60 du compresseur de fluide 1 agencée pour activer le compresseur de fluide 1. L'unité de pilotage 54 est agencée pour communiquer avec l'unité de commande 60 afin d'activer le compresseur de fluide 1 seulement en cas de besoin par l'élément fonctionnel 53.

D'une manière préférée, le compresseur de fluide 1 est disposé dans la machine 50 en positionnant l'axe A de l'arbre 6 du rotor 5 à la verticale. Cette position verticale ainsi que les paliers de l'invention comprenant un unique élément sphérique centré permettent de maintenir au centre le poids du rotor 5 et de réduire au maximum les risques de déplacement de l'arbre 6. On a alors un autocentrage de l'arbre 6, les paliers selon l'invention permettant un maintien axial et radial. De plus, l'utilisation de paliers aérodynamiques en combinaison avec les paliers de l'invention permet de maintenir un jeu fonctionnel radial et axial lors du démarrage ou de changement de régime du rotor 5.

Le compresseur de fluide selon l'invention permet d'atteindre des vitesses de rotation très élevées, comprises entre 100 000 tr/min et 1 000 000 tr/min. Ces très hautes vitesses permettent de prévoir un compresseur de fluide de dimensions plus petites pour une même puissance, autorisant son intégration dans le châssis d'une machine. Toute connexion de la machine à un compresseur appartenant à un réseau central est supprimée. Ainsi, le circuit d'amenée du fluide comprimé à l'élément fonctionnel est très court. Cela réduit d'une part les risques de fuite, et d'autre part évite les pollutions susceptibles d'apparaitre au cours du transport du fluide comprimé à travers un réseau central. Cela permet également un temps de réaction très rapide du compresseur, de sorte que ce dernier peut fonctionner uniquement à la demande de l'élément fonctionnel. Lorsqu'aucun fluide comprimé n'est demandé par l'élément fonctionnel 53, le compresseur de fluide 1 est à l'arrêt de sorte qu'il n'y a pas de consommation d'énergie pendant cette période de repos, d'où une réduction de la consommation d'énergie globale de la machine. De plus, le compresseur selon l'invention fonctionne sans agent de lubrification, de sorte qu'aucun lubrifiant ne risque de polluer le fluide comprimé.

Le compresseur selon l'invention peut être utilisé dans de nombreuses applications, telles que des applications industrielles, médicales, pharmaceutiques, alimentaires, automobiles, pour l'apport d'air comprimé.

## Revendications

1. Compresseur d'air comprenant un bâti (2) dans lequel sont montés un stator (4), un rotor (5) interagissant avec ledit stator (4) pour former un moteur synchrone, et comprenant un arbre (6), au moins une turbine (12) portée par ledit arbre (6), un canal d'amenée d'air (14) vers la turbine (12), et un canal de sortie d'air comprimé (16), l'arbre (6) du rotor (5) étant monté en rotation sur le bâti (2) autour d'un axe (A) au moyen d'un premier (7) et d'un second (8) paliers, dans lequel ledit premier (7), respectivement ledit second (8), palier comprend un premier (18), respectivement un second (22), élément sphérique prévu à une première (9), respectivement une seconde (10), extrémité de l'arbre et disposé de manière centrée par rapport à l'axe (A) de l'arbre (6) et un premier (20), respectivement un deuxième (24), logement prévu dans le bâti (2) présentant la forme d'une calotte avec un fond incurvé disposée de manière centrée par rapport à l'axe (A) de l'arbre (6) et agencée pour supporter ledit premier (18), respectivement ledit second (22), élément sphérique,
**caractérisé en ce que** le rayon de la calotte formant le premier logement (20) étant supérieur au rayon du premier élément sphérique (18), ledit premier élément sphérique (18) étant en contact tangentiel avec le fond incurvé dudit premier logement (20) et le rayon de la calotte formant le deuxième logement (24) étant supérieur au rayon du second élément sphérique (22), ledit second élément sphérique (22) étant en contact tangentiel avec le fond incurvé dudit deuxième logement (24), **en ce qu'**au moins deux paliers aérodynamiques (36, 38) sont prévus sensiblement de chaque côté de l'arbre (6) du rotor (5), et **en ce qu'**un premier palier aérodynamique (36) est prévu en amont de la turbine (12), ledit premier palier aérodynamique (36) étant porté par un troisième élément-support (40) disposé de manière centrée par rapport à l'axe (A) de l'arbre (6) dans le canal d'amenée d'air (14), et maintenu aux parois dudit canal d'amenée d'air (14) au moyen de branches (44) entre lesquelles l'air peut circuler.

2. Compresseur d'air selon la revendication 1, **caractérisé en ce que** le premier logement (20) est prévu dans le canal d'amenée d'air (14).

3. Compresseur d'air selon la revendication 2, **caractérisé en ce que** ledit premier logement (20) est prévu dans un premier élément-support (26) disposé de manière centrée par rapport à l'axe (A) de l'arbre (6) dans le canal d'amenée d'air (14), et maintenu aux parois dudit canal d'amenée d'air (14) au moyen de branches (28) entre lesquelles l'air peut circuler.

4. Compresseur d'air selon l'une des revendications précédentes, **caractérisé en ce que** le deuxième logement (24) est prévu dans un deuxième élément-support (30) disposé dans le bâti (2) de manière centrée par rapport à l'axe (A) de l'arbre (6) et à l'opposé du premier élément-support (26).

5. Compresseur d'air selon la revendication 4, **caractérisé en ce que** le deuxième élément-support (30) est monté de manière coulissante dans le bâti (2) et est relié audit bâti (2) par des moyens élastiques (32) agencés pour absorber les variations de jeu entre le rotor (5) et le stator (4).

6. Compresseur d'air selon l'une des revendications précédentes, **caractérisé en ce qu'**un deuxième palier aérodynamique (38) est prévu au niveau de l'extrémité de l'arbre (6) du rotor (5), du côté opposé au canal d'amenée d'air (14).

7. Compresseur d'air selon l'une des revendications précédentes, **caractérisé en ce que** au moins l'une des première (9) et seconde (10) extrémités de l'arbre (6) du rotor (5) comprend un troisième logement (29, 34) présentant la forme d'une calotte disposée de manière centrée par rapport à l'axe (A) de l'arbre (6) et agencée pour recevoir ledit élément sphérique (18, 22) monté libre dans ledit troisième logement (29, 34).

8. Compresseur d'air selon l'une des revendications 1 à 6, **caractérisé en ce que** l'élément sphérique (18, 22) est solidaire d'au moins l'une des première (9) et seconde (10) extrémités de l'arbre (6) du rotor (5).

## Patentansprüche

1. Luftverdichter, umfassend ein Gestell (2), in dem ein Stator (4), ein Rotor (5), der mit dem Stator (4) interagiert, um einen Synchronmotor zu bilden, und eine Welle (6), mindestens eine Turbine (12), die von der Welle (6) getragen wird, einen Luftzuführungskanal (14) zur Turbine (12), und einen Druckluftauslasskanal (16) umfassend, montiert sind, wobei die Welle (6) des Rotors (5) anhand eines ersten (7) und eines zweiten (8) Lagers um eine Achse (A) drehend auf dem Gestell (2) montiert ist, wobei das erste (7) beziehungsweise das zweite (8) Lager ein erstes (18) beziehungsweise ein zweites (22) Kugelelement umfasst, das an einem ersten (9) beziehungsweise einem zweiten (10) Ende der Welle vorgesehen ist, und in Bezug auf die Achse (A) der Welle (6) zentriert angeordnet ist, und eine erste (20) beziehungsweise eine zweite (24) Aufnahme, die in dem Gestell (2) vorgesehen ist, die Form einer Kalotte mit einem gekrümmten Boden aufweist, die in Bezug auf die Achse (A) der Welle (6) zentriert angeordnet ist, und ausgeführt ist, um das erste (18) beziehungsweise das zweite (22) Kugelelement abzustützen, **dadurch gekennzeichnet, dass** der Radius der Kalotte, die die erste Aufnahme (20) bildet, größer als der Radius des ersten Kugelelements (18) ist, wobei das erste Kugelelement (18) in tangentialem Kontakt mit dem gekrümmten Boden der ersten Aufnahme (20) ist, und der Radius der Kalotte, die die zweite Aufnahme (24) bildet, größer als der Radius des zweiten Kugelelements (22) ist, wobei das zweite Kugelelement (22) in tangentialem Kontakt mit dem gekrümmten Boden der zweiten Aufnahme (24) ist, dadurch, dass mindestens zwei aerodynamische Lager (36, 38) im Wesentlichen auf jeder Seite der Welle (6) des Rotors (5) vorgesehen sind, und dadurch, dass eine erstes aerodynamisches Lager (36) stromaufwärts der Turbine (12) vorgesehen ist, wobei das erste aerodynamische Lager (36) durch ein drittes Abstützelement (40) getragen wird, das in Bezug auf die Achse (A) der Welle (6) zentriert in dem Luftzuführungskanal (14) angeordnet ist, und anhand von Armen (44) an den Wänden des Luftzuführungskanals (14) festgehalten wird, zwischen denen die Luft zirkulieren kann.

2. Luftverdichter nach Anspruch 1, **dadurch gekennzeichnet, dass** die erste Aufnahme (20) in dem Luftzuführungskanal (14) vorgesehen ist.

3. Luftverdichter nach Anspruch 2, **dadurch gekennzeichnet, dass** die erste Aufnahme (20) in einem ersten Abstützelement (26) vorgesehen ist, das in Bezug auf die Achse (A) der Welle (6) zentriert in dem Luftzuführungskanal (14) angeordnet ist, und anhand von Armen (28) an den Wänden des Luftzuführungskanals (14) festgehalten wird, zwischen denen die Luft zirkulieren kann.

4. Luftverdichter nach einem der vorstehenden Ansprüche, **dadurch gekennzeichnet, dass** die zweite Aufnahme (24) in einem zweiten Abstützelement (30) vorgesehen ist, das in Bezug auf die Achse (A) der Welle (6) zentriert und gegenüber dem ersten Abstützelement (26) in dem Gestell (2) angeordnet ist.

5. Luftverdichter nach Anspruch 4, **dadurch gekennzeichnet, dass** das zweite Abstützelement (30) gleitend in dem Gestell (2) montiert ist, und durch elastische Mittel (32), die ausgeführt sind, um die Spielvariationen zwischen dem Rotor (5) und dem Stator (4) zu absorbieren, mit dem Gestell (2) verbunden ist.

6. Luftverdichter nach einem der vorstehenden Ansprüche, **dadurch gekennzeichnet, dass** ein zweites aerodynamisches Lager (38) im Bereich des Endes der Welle (6) des Rotors (5) auf der gegenüberliegenden Seite zum Luftzuführungskanal (14) vorgesehen ist.

7. Luftverdichter nach einem der vorstehenden Ansprüche, **dadurch gekennzeichnet, dass** mindestens eines des ersten (9) und zweiten (10) Endes der Welle (6) des Rotors (5) eine dritte Aufnahme (29, 34) umfasst, die die Form einer Kalotte aufweist, die in Bezug auf die Achse (A) der Welle (6) zentriert angeordnet ist, und ausgeführt ist, um das in der dritten Aufnahme (29, 34) frei montierte Kugelelement (18, 22) aufzunehmen.

8. Luftverdichter nach einem der Ansprüche 1 bis 6, **dadurch gekennzeichnet, dass** das Kugelelement (18, 22) mit mindestens einem des ersten (9) und zweiten (10) Endes der Welle (6) des Rotors (5) fest verbunden ist.

## Claims

1. Air compressor comprising a frame (2) in which there are mounted a stator (4), a rotor (5) interacting with said stator (4) to form a synchronous motor, and comprising a shaft (6), at least one turbine (12) carried by said shaft (6), a air-supply channel (14) to the turbine (12), and an outlet channel (16) for compressed air, the shaft (6) of the rotor (5) being mounted rotatably on the frame (2) about an axis (A) by means of a first (7) and a second (8) bearing, wherein said first (7), respectively said second (8), bearing comprises a first (18), respectively a second (22), spherical element provided on a first (9), respectively a second (10), end of the shaft and disposed centred relative to the axis (A) of the shaft (6), and a first (20), respectively a second (24), housing provided in the frame (2) and having the form of a cap disposed centred relative to the axis (A) of the shaft (6) and provided in order to support said first (18), respectively said second (22), spherical element, **characterized in that** the radius of the cap forming the first housing (20) is greater than the radius of the first spherical element (18), said first spherical element (18) being in a tangential with the inwardly curved base of the first housing (20) and the radius of the cap forming the second housing (24) is greater than the radius of the second spherical element (22), said second spherical element (22) being in a tangential with the inwardly curved base of the second housing (24), **in that** at least two aerodynamic bearings (36, 38) are provided substantially on each side of the shaft (6) of the rotor (5), and **in that** a first aerodynamic bearing (36) is provided upstream of the turbine (12), said first aerodynamic bearing (36) being carried by a third support element (40) disposed centred relative to the axis (A) of the shaft (6) in the air-supply channel (14), and retained on the walls of said air-supply channel (14) by means of branches (44) between which the air can circulate.

2. Air compressor according to claim 1, **characterised in that** the first housing (20) is provided in the air-supply channel (14).

3. Air compressor according to claim 2, **characterised in that** said first housing (20) is provided in a first support element (26) disposed centred relative to the axis (A) of the shaft (6) in the air-supply channel (14), and retained on the walls of said air-supply channel (14) by means of branches (28) between which the air can circulate.

4. Air compressor according to any of the preceding claims, **characterised in that** the second housing (24) is provided in a second support element (30) disposed in the frame (2) centred relative to the axis (A) of the shaft (6) and opposite the first support element (26).

5. Air compressor according to claim 4, **characterised in that** the second support element (30) is mounted to slide in the frame (2) and is connected to said frame (2) by elastic means (32) which are provided in order to absorb clearance variations between the rotor (5) and the stator (4).

6. Air compressor according to one of the preceding claims, **characterised in that** a second aerodynamic bearing (38) is provided at the level of the end of the shaft (6) of the rotor (5), on the opposite side to the air-supply channel (14).

7. Air compressor according to one of the preceding claims, **characterised in that** at least one of the first (9) and second (10) ends of the shaft (6) of the rotor (5) comprises a third housing (29, 34) having the form of a cap disposed centred relative to the axis (A) of the shaft (6) and provided in order to receive said spherical element (18, 22), which is mounted freely in said third housing (29, 34).

8. Air compressor according to one of the claims 1 to 6, **characterised in that** the spherical element (18, 22) is integral with at least one of the first (9) and second (10) ends of the shaft (6) of the rotor (5).
